# EUROPEAN PATENT SPECIFICATION

(11) **EP 2 282 248 B1**
(45) Date of publication and mention of the grant of the patent: **25.10.2017**
(21) Application number: 10155364.2
(22) Date of filing: 03.03.2010
(51) Int. Cl.: H05B 33/08, G05F 3/16

(54) **A constant current device**
Konstantstromvorrichtung
Dispositif à courant constant

(30) Priority: 05.08.2009 TW 098126351
(43) Date of publication of application: 09.02.2011
(73) Proprietor: Advanced-Connectek Inc., Taipei (TW)
(72) Inventor: Cheng, Ching-Chi, Taipei County (TW); Chien, Wen-Hsiang, Taipei County (TW)
(74) Representative: Viering, Jentschura & Partner mbB Patent- und Rechtsanwälte

(56) References cited:
- DE-A1- 3 150 176
- JP-A- S60 230 222
- US-A1- 2008 068 298

## Description

### FIELD OF THE INVENTION

The present invention relates to a constant current device.

### BACKGROUND OF THE INVENTION

Conventional constant current devices are used to control current flowing through other devices. Constant current devices are particularly advantageous when used with light emitting diodes (LEDs) because a constant current flowing through LEDs makes light emitted from the LEDs steady and remains life of LEDs.

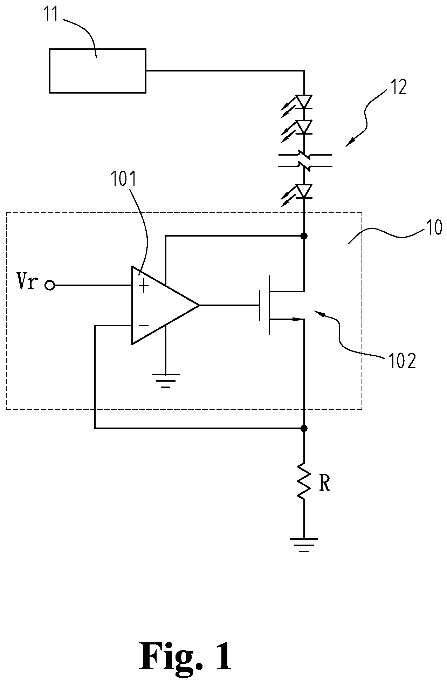

With reference to Figs. 1, a conventional LED device comprises an LED module (12), a power supply (11), a reference voltage (Vᵣ), a constant current driver (10) (i.e. a constant current device) and a resistor (R).

The LED module (12) comprises at least one LED and an output and has an output current. The LEDs in the LED module (12) may be connected in series, parallel or both.

The power supply (11) supplies direct current or rectified alternating current to the LED module (12).

The reference voltage (Vᵣ) is constant.

The constant current driver (10) is connected to the output of the LED module (12), senses and regulates current flowing through the LED module (12), has an output current and output voltage (V_{O}) and comprises an error sensor (101) and a transistor (102).

The output voltage (V_{O}) is a pulsating DC voltage.

The error sensor (101) may be an operational amplifier and comprises a source, a ground, an inverted input, a control input and an output.

The source is connected to the output of the LED module (12).

The inverted input senses voltage at the output of the constant current driver (10).

The control input is connected to the reference voltage (Vᵣ).

The output generates an error signal by comparing the output voltage (V_{O}) and the reference voltage (Vᵣ).

The transistor (102) comprises a drain, a gate and a source and has a gate voltage, an equivalent resistance, a drain voltage, a drain current and a channel. The drain is connected to the output of the LED module (12) and the source of the error sensor (101). The gate is connected to the output of the error sensor (101). The gate voltage is the error signal. The equivalent resistance is adjusted by the gate voltage to make the output voltage equal the reference voltage (Vᵣ). The drain voltage is greater than the gate voltage and is between the drain and the source. The drain current has a magnitude, flows from the drain to the source and the magnitude of the drain current is controlled by the gate voltage and the width of the channel. Therefore, if the magnitude of the drain current increased, the width of the channel need to be increased, too.

The resistor (R) has an input and an output and drops a voltage proportional to the current flowing through the resistor (R). The input of the resistor (R) is connected to the source of the transistor (102) and the inverted input of the error sensor (101). The output of the resistor (R) is connected to the ground.

Since the output current of the constant current driver (10) is equal to the drain current and has been limited by the gate voltage is under the drain voltage, if the output current needs increase, the width of the channel must increase. So the manufacturing cost of the constant current driver (10) increasing based on the width of the channel, too.

US 2008/0068298 A1 disclosed a constant power DC light emitting diode driving system. The system comprises a plurality of LED, a DC voltage source for LED current generation, and a constant-voltage and constant-current regulator for constant luminance control.

JPS60230222 A disclosed a constant current circuit. The constant current circuit is used to o reduce the dependability on a variation of manufacturing a semiconductor integrated circuit by constituting the first and the second transistors, the first and the second constant current sources, and the first and the second resistances of a specified circuit. A series body consists of the first transistor Q1, the first resistance R1 and the first constant current source I1 is connected to a DC power source Vcc. Also, a series body consists of the second constant current source I0, the second TrQ2 and the second resistance R2 is provided in parallel between said first TrQ1 and the first resistance R1, the bases of the first and the second Trs Q1, Q2 are connected, respectively, as shown in the figure, and a constant current output IOUT is obtained from an output point.

### SUMMARY OF THE INVENTION

The objective of the present invention is to provide a device that generates a constant current.

The constant current device in accordance with the present invention is connected to an external voltage source and comprises an input unit, a driving transistor and a voltage control unit.

The input unit has an input and an output and is connected to the external voltage source.

The driving transistor is used to output constant current.

The voltage control unit makes the driving transistor output constant current and comprises a semiconductor load and at least one resistor and has a resistor voltage. The resistor comprising an input and an output.

### BRIEF DESCRIPTION OF THE DRAWINGS

Fig. 1 is a circuit diagram of a conventional light emitting diode (LED) driving device;
Fig. 2 is a circuit diagram of a constant current device in accordance with the present invention;
Fig. 3 is a circuit diagram of a first embodiment of the constant current device in Fig. 2;
Fig. 4 is a circuit diagram of a second embodiment of the constant current device in Fig. 2;
Fig. 5 is a circuit diagram of a third embodiment of the constant current device in Fig. 2;
Fig. 6 is a circuit diagram of a fourth embodiment of the constant current device in Fig. 2; and
Fig. 7 is a circuit diagram of a fifth embodiment of the constant current device in Fig. 2.

### DETAILED DESCRIPTION OF THE PRESENT INVENTION

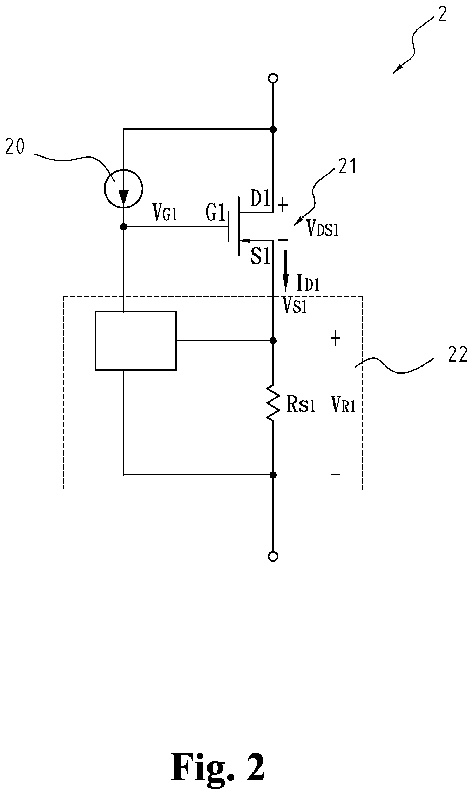

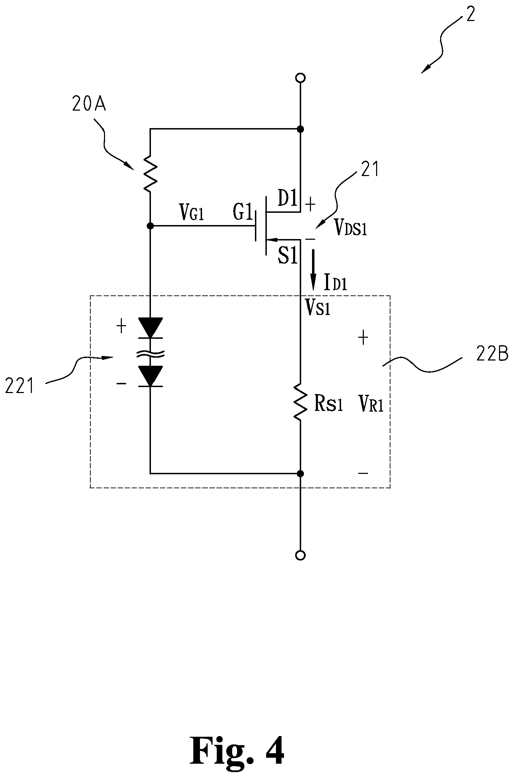

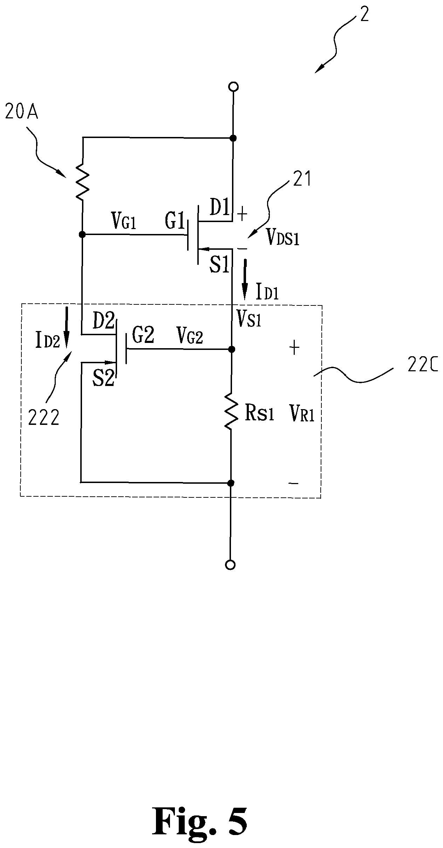

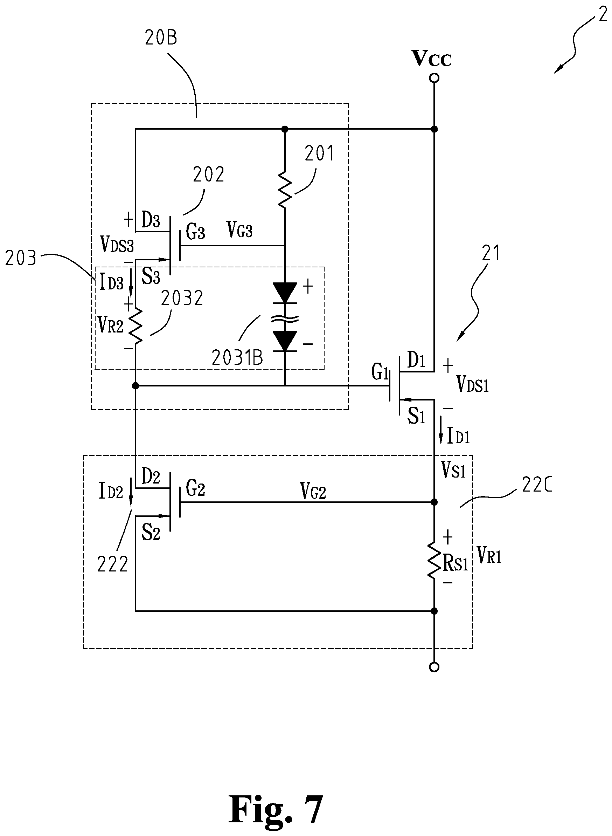

With reference to Figs. 2 to 7, a constant current device (2) in accordance with the present invention is connected to an external voltage source, and comprises an input unit (20), a driving transistor (21) and a voltage control unit (22). The constant current device (2) may be used in a solid state light device and a conventional triode for alternating current dimmer. The external voltage source may be a rectified alternating voltage source or a direct voltage source.

The input unit (20) is used for supplying a constant current, may be an input resistor (20A) or an input circuit (20B) and has an input and an output. The input is connected to the external voltage source.

The input resistor (20A) has an input and an output.

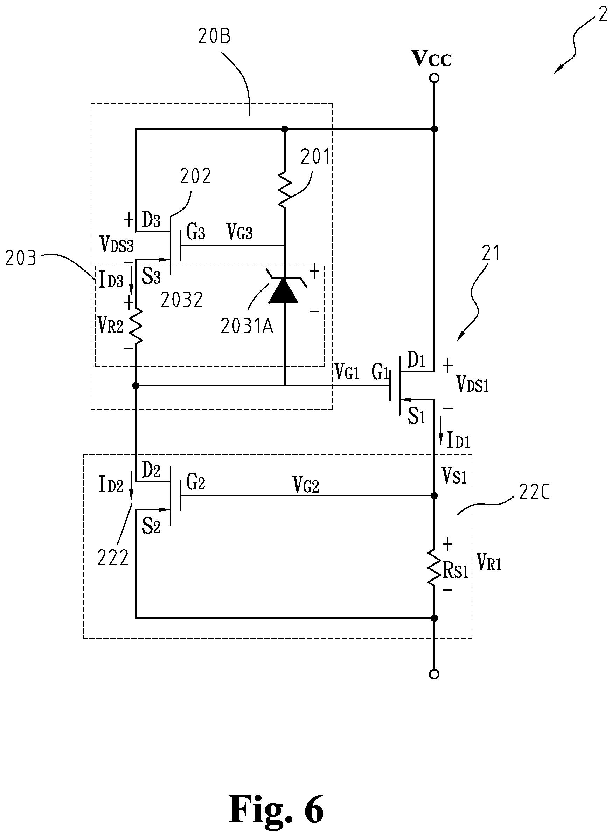

With reference to Figs. 6 to 7, the input circuit (20B) comprises an auxiliary input resistor (201), a constant current transistor (202) and an auxiliary voltage control unit (203).

The auxiliary input resistor (201) is connected to the external voltage source, divides voltage from the external voltage source and has an input and an output.

The constant current transistor (202) is used to output constant current and comprises a drain (D3), a gate (G3) and a source (S3) and has a drain current (I_{D3}), a gate voltage (V_{G3}) and a drain voltage (V_{DS3}) drops from the drain (D3) to the source (S3). The drain (D3) is connected to the external voltage source. The gate (G3) is connected to the output of the auxiliary input resistor (201). The drain current (I_{D3}) flows through the constant current transistor (202) and is a constant current. The gate voltage (V_{G3}) controls how much drain current (I_{D3}) flows through the constant current transistor (202).

The auxiliary voltage control unit (203) makes the constant current transistor outputs constant current and comprises at least one auxiliary resistor (2032) and an auxiliary semiconductor load.

The auxiliary resistor (2032) comprises an input, an output and a resistor voltage (V_{R2}). The input is connected to the source (S3) of the constant current transistor (202). The resistor voltage (V_{R2}) is produced by the drain current (I_{D3}) flowing through the auxiliary resistor (2032) and controls the gate voltage (V_{G3}).

The auxiliary semiconductor load is used to make the gate voltage (V_{G3}) of constant current transistor (202) constant and may be at least one zener diode (2031A) or multiple diodes (2031B) and has an input and an output. The input of the auxiliary semiconductor load is connected to the gate (G3) of the constant current transistor (202). The output is connected to the output of the at least one auxiliary resistor (2032).

With reference to Figs. 2 to 7, the driving transistor (21) may be an NMOS transistor (N-type metal-oxide-semiconductor transistor) or an NPN transistor (N-P-N bipolar transistor). The driving transistor (21) is used to output constant current and may comprise a drain (D1), a gate (G1) and a source (S1) and may have a threshold voltage (V_{TH}), an inner resistance, a drain voltage (V_{DS1}), a drain current (I_{D1}) and a saturation mode. The drain (D1) is connected to the external voltage source. The drain current (I_{D1}) flows from the drain (D1) through the driving transistor (21) and has a magnitude. The gate (G1) is connected to the input unit (20) and has a gate voltage (V_{G1}). The gate voltage (V_{G1}) controls the magnitude of the drain current (I_{D1}) when the driving transistor (21) works on the saturation mode. The source (S1) comprises source voltage (V_{S1}). The drain voltage (V_{DS1}) is between the drain (D1) and the source (S1). The saturation mode is a mode that the driving transistor (21) passes the most current and has a condition. The condition is V_{G1} - (V_{TH} + V_{S1}) < V_{DS1}. Since the drain voltage (V_{DS1}) is always greater than the gate voltage (V_{G1}) minus the threshold voltage (V_{TH}) and the source voltage (V_{S1}) so the driving transistor (21) is always works on the saturation mode.

The voltage control unit (22, 22A, 22B, 22C) makes the driving transistor (21) output constant current and comprises at least one resistor (R_{S1}) and a semiconductor load (220, 221, 222). The resistor voltage (V_{R1}) is voltage across the resistor (R_{S1}) that is produced by the drain current (I_{D1}) flowing through the resistor (R_{S1}), and the resistor voltage (V_{R1}) controls the gate voltage (V_{G1}) of the driving transistor (21).

The at least one resistor (R_{S1}) comprises an input and an output, and has a resistor voltage (V_{R1}). The input is connected to the source (S1) of the driving transistor (21).

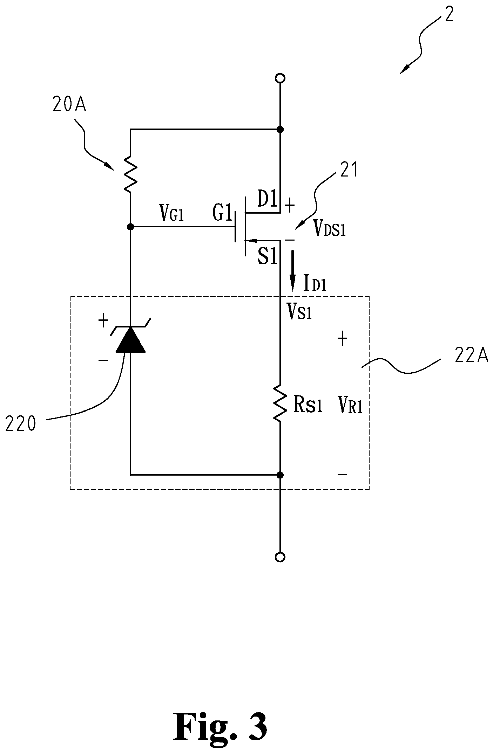

With reference to Figs. 3 to 5, the semiconductor load (220, 221, 222) is used to make the gate voltage (V_{G1}) of the driving transistor (21) constant and may be a zener diode (220), multiple diodes (221) or a transistor (222).

The zener diode (220) comprises an anode and a cathode, has a breakdown voltage and makes the gate voltage (V_{G1}) is a stable voltage when the voltage of the external voltage source increases, then the drain current (I_{D1}) is constant. The cathode of the zener diode (220) is connected to the input unit (20). The anode of the zener diode (220) is connected to the output of the resistor (R_{S1}). The breakdown voltage corresponds to the threshold voltage (V_{TH}) of the driving transistor (21).

The multiple diodes (221) connected in series and comprise an input and an output and have a cut-in voltage. The cut-in voltage is equal to the gate voltage (V_{G1}) to make the drain current (I_{D1}) constant. The input of the multiple diodes (221) is connected to the input unit (20). The output of the multiple diodes (221) is connected to the output of the resistor (R_{S1}).

The transistor (222) comprises a drain (D2), a gate (G2) and a source (S2). The transistor (222) makes the gate voltage (V_{G1}) of the driving transistor (21) to be a stable voltage, so the drain current (I_{D1}) is constant. The drain (D2) is connected to the gate (G1) of the driving transistor (21) and the input unit (20). The gate (G2) of the transistor (222) is connected to the input of the resistor (R_{S1}) and has gate voltage (V_{G2}) that equal to the resistor voltage and is constant. The source (S2) of the transistor (222) is connected to the output of the resistor (R_{S1}).

Accordingly, the constant current device of the present invention using the driving transistor to outputs constant current. Since the design of transistor is simple than the operational amplifier's and the drain voltage of the transistor has not be limited, hence the manufacturing cost can lower than the conventional constant current devices.

## Claims

1. A constant current device (2) being connected to an external voltage source (Vcc) and comprising:
an input circuit (20B) being used for supplying a constant current and including:
an auxiliary input resistor (201) having an input and an output, wherein the input connected to the external voltage source (Vcc);
a constant current transistor (202) having a gate (G3), a source (S3), and a drain (D3), wherein the drain (D3) is connected to the external voltage source (Vcc), the gate (G3) is connected to the output of the auxiliary input resistor (201), a drain voltage (V_{D3}) is dropped from the drain (D3) to the source (S3), a gate voltage (V_{G3}) is dropped from the external voltage source(Vcc) to the auxiliary input resistor (201) and controls a drain current (I_{D3}) flowing through the constant current transistor (202), and a drain current (I_{D3}) flowing through the constant current transistor (202) is a constant current; and
an auxiliary voltage control unit (203) including at least one auxiliary voltage control resistor (2032) and an auxiliary semiconductor load (2031A), wherein the auxiliary voltage control resistor (2032) has an input connected to the source (S3) of the constant current transistor (202) and an output, the auxiliary semiconductor load (2031A) has an input connected to the gate (G3) of the constant current transistor (202); and an output connected to the output of the at least one auxiliary voltage control resistor (2032), wherein a resistor voltage (V_{R2}) is dropped across the auxiliary voltage control resistor (2032) and produced by the drain current (I_{D3}) flowing through the auxiliary voltage control resistor (2032);
a driving transistor (21) including a drain (D1) connected to the external voltage source (Vcc) and the input of the input unit (20), a gate (G1) connected to the output of the input unit (20), and a source (S1) with a source voltage (V_{S1}), wherein a gate voltage (V_{G1}) of the driving transistor (21)is controlled by the resistor voltage (V_{R2}), a drain voltage (V_{DS1}) is dropped between the drain (D1) and the source (S1), and a constant current (I_{D1}) is outputted from the source (S1); and
a voltage control unit (22c) including at least one resistor (R_{S1}), and a semiconductor load, wherein the resistor (R_{S1}) has an input connected to the source (S1) of the driving transistor (21) and an output, the semiconductor load is a load transistor (222) and has a drain (D2) connected to the gate (G1) of the driving transistor (21) and the output of the input unit (20), a gate (G2) connected to the input of the resistor (R_{S1}) and the source (S1) of the driving transistor (21) and a source (S2) connected to the output of the resistor (R_{S1}),
wherein a resistor voltage (V_{R1}) is dropped across the resistor (R_{S1}), a gate voltage (V_{G2}) of the gate (G2) is constant and equals to the resistor voltage (V_{R1}) and the voltage control unit (22c) controls the driving transistor (21) to output the constant current (I_{D1}).

2. The constant current device as claimed in claim 1, wherein the driving transistor (21) has an inner resistance and a threshold voltage, the drain current (I_{D1}) flows from the drain (D1) through the driving transistor (21) and has a magnitude, the driving transistor (21) is controllable in a saturation mode in which the driving transistor (21) passes the most current, and the gate voltage (V_{G1}) controlling the magnitude of the drain current (I_{D1}).

3. The constant current device as claimed in claim 1 or 2, wherein the voltage control unit (22c) controls the gate voltage (V_{G2}) of the load resistor (222) by the resistor voltage (V_{R1}), and the resistor voltage (V_{R1}) is produced from the drain current (I_{D1}) flowing through the resistor (R_{S1}).

4. The constant current device as claimed in claim 1 to 3, wherein the external voltage source (Vcc)is a rectified alternating voltage source.

5. The constant current device as claimed in claim 1 to 4, wherein the external voltage source (Vcc) is a direct voltage source.

6. The constant current device as claimed in claim 1 to 5, the constant current device can be used in a solid state light device.

7. The constant current device as claimed in claim 1 to 6, the constant current device can be used in a conventional triode for alternating current dimmer.

8. The constant current device as claimed in claim 1 to 7, wherein the auxiliary semiconductor load (2031A, 2031B) is at least one zener diode.

9. The constant current device as claimed in claim 1 to 7, wherein the auxiliary semiconductor load (2031A, 2031B) is multiple diodes.

## Patentansprüche

1. Eine Konstantstromvorrichtung (2), welche mit einer externen Spannungsquelle (Vcc) verbunden ist, aufweisend:
eine Eingangsschaltung (20B), die zum Bereitstellen eines Konstantstroms verwendet wird und welche aufweist:
einen Hilfs-Eingangswiderstand (201), der einen Eingang und einen Ausgang hat, wobei der Eingang mit der externen Spannungsquelle (Vcc) verbunden ist,
einen Konstantstrom-Transistor (202), der ein Gate (G3), eine Source (S3) und einen Drain (D3) hat, wobei der Drain (D3) mit der externen Spannungsquelle (Vcc) verbunden ist, das Gate (G3) mit dem Ausgang des Hilfs-Eingangswiderstands (201) verbunden ist, eine Drain-Spannung (V_{D3}) von dem Drain (D3) zu der Source (S3) abfällt, eine Gate-Spannung (V_{G3}) von der externen Spannungsquelle (Vcc) zu dem Hilfs-Eingangswiderstand (201) abfällt und einen Drain-Strom (I_{D3}) steuert, der durch den Konstantstrom-Transistor (202) fließt, und wobei ein durch den Konstantstrom-Transistor (202) fließender Drain-Strom (I_{D3}) ein Konstantstrom ist, und
eine Hilfs-Spannungssteuereinheit (203), welche mindestens einen Hilfs-Spannungssteuerwiderstand (2032) und eine Hilfs-Halbleiterlast (2031A) aufweist, wobei der Hilfs-Spannungssteuerwiderstand (2032) einen Eingang, der mit der Source (S₃) des Konstantstrom-Transistors (202) verbunden ist, und einen Ausgang hat, die Hilfs-Halbleiterlast (2031A) einen Eingang hat, der mit dem Gate (G3) des Konstantstrom-Transistors (202) verbunden ist, und einen Ausgang, der mit dem Ausgang des mindestens einen Hilfs-Spannungssteuerwiderstands (2032) verbunden ist, wobei eine Widerstand-Spannung (V_{R2}) über dem Hilfs-Spannungssteuerwiderstand (2032) abfällt und von dem Drain-Strom (I_{D3}) erzeugt wird, der durch den Hilfs-Spannungssteuerwiderstand (2032) fließt,
einen Treiber-Transistor (21), der aufweist einen Drain (D1), der mit der externen Spannungsquelle (Vcc) und dem Eingang der Eingangseinheit (20) verbunden ist, ein Gate (G1), das mit dem Ausgang der Eingangseinheit (20) verbunden ist, und eine Source (S1) mit einer Source-Spannung (V_{S1}), wobei eine Gate-Spannung (V_{G1}) des Treiber-Transistors (21) von der Widerstand-Spannung (V_{R2}) gesteuert wird, eine Drain-Spannung (V_{DS1}) zwischen dem Drain (D1) und der Source (S1) abfällt, und ein Konstantstrom (I_{D1}) von der Source (S1) ausgegeben wird, und
eine Spannungssteuereinheit (22c), die mindestens einen Widerstand (R_{S1}) und eine Halbleiterlast aufweist, wobei der Widerstand (R_{S1}) einen Eingang, der mit der Source (S1) des Treiber-Transistors (21) verbunden ist, und einen Ausgang hat, und wobei die Halbleiterlast ein Last-Transistor (222) ist und einen Drain (D2) hat, der mit dem Gate (G1) des Treiber-Transistors (21) und dem Ausgang der Eingangseinheit (20) verbunden ist, ein Gate (G2), das mit dem Eingang des Widerstands (R_{S1}) und der Source (S1) des Treiber-Transistors (21) verbunden ist, und eine Source (S2), die mit dem Ausgang des Widerstands (R_{S1}) verbunden ist,
wobei eine Widerstand-Spannung (V_{R1}) über den Widerstand (R_{S1}) abfällt, eine Gate-Spannung (V_{G2}) des Gate (G2) konstant und gleich der Widerstand-Spannung (V_{R1}) ist, und die Spannungssteuereinheit (22c) den Treiber-Transistor (21) so steuert, dass dieser den Konstantstrom (I_{D1}) ausgibt.

2. Die Konstantstromvorrichtung gemäß Anspruch 1, wobei
der Treiber-Transistor (21) einen inneren Widerstand und eine Schwellenspannung hat, der Drain-Strom (I_{D1}) von dem Drain (D1) durch den Treiber-Transistor (21) fließt und eine Stärke hat, der Treiber-Transistor (21) steuerbar ist in einem Sättigungsmodus, in welchem der Treiber-Transistor (21) den meisten Strom durchlässt, und wobei die Gate-Spannung (V_{G1}) die Stärke des Drain-Stroms (I_{D1}) steuert.

3. Die Konstantstromvorrichtung gemäß Anspruch 1 oder 2, wobei die Spannungssteuereinheit (22c) die Gate-Spannung (V_{G2}) des Lastwiderstands (222) durch die Widerstandsspannung (V_{R1}) steuert, und die Widerstandsspannung (V_{R1}) erzeugt wird von dem durch den Widerstand (R_{S1}) fließenden Drain-Strom (I_{D1}).

4. Die Konstantstromvorrichtung gemäß einem der Ansprüche 1 bis 3, wobei die externe Spannungsquelle (Vcc) eine gleichgerichtete Wechselspannungsquelle ist.

5. Die Konstantstromvorrichtung gemäß einem der Ansprüche 1 bis 4, wobei die externe Spannungsquelle (Vcc) eine Gleichspannungsquelle ist.

6. Die Konstantstromvorrichtung gemäß einem der Ansprüche 1 bis 5, wobei die Konstantstromvorrichtung in einer Festkörper-Beleuchtungsvorrichtung verwendet werden kann.

7. Die Konstantstromvorrichtung gemäß einem der Ansprüche 1 bis 6, wobei die Konstantstromvorrichtung in einer konventionellen Triode für einen Wechselstrom-Dimmer verwendet werden kann.

8. Die Konstantstromvorrichtung gemäß einem der Ansprüche 1 bis 7, wobei die Hilfs-Halbleiterlast (2031A, 2031B) mindestens eine Zenerdiode ist.

9. Die Konstantstromvorrichtung gemäß einem der Ansprüche 1 bis 7, wobei die Hilfs-Halbleiterlast (2031A, 2031B) mehrere Dioden ist.

## Revendications

1. Dispositif à courant constant (2) connecté à une source de tension externe (V_{cc}) et comprenant :
un circuit d'entrée (20B) utilisé pour appliquer un courant constant et comprenant :
une résistance d'entrée auxiliaire (201) ayant une entrée et une sortie, l'entrée étant connectée à la source de tension externe (V_{cc}) ;
un transistor à courant constant (202) ayant une grille (G3), une source (S3) et un drain (D3), le drain (D3) étant connecté à la source de tension externe (V_{cc}), la grille (G3) étant connectée à la sortie de la résistance d'entrée auxiliaire (201), une tension de drain (V_{D3}) chutant du drain (D3) à la source (S3), une tension de grille (V_{G3}) chutant de la source de tension externe (V_{cc}) à la résistance d'entrée auxiliaire (201), et contrôlant un courant de drain (I_{D3}) s'écoulant à travers le transistor à courant constant (202) et un courant de drain (I_{D3}) s'écoulant à travers le transistor à courant constant (202) étant un courant constant ; et
une unité de contrôle de tension auxiliaire (203) comprenant au moins une résistance de contrôle de tension auxiliaire (2032) et une charge semi-conductrice auxiliaire (2031A), la résistance de contrôle de tension auxiliaire (2032) ayant une entrée connectée à la source (S3) du transistor à courant constant (202) et une sortie, la charge semi-conductrice auxiliaire (2031A) ayant une entrée connectée à la grille (G3) du transistor à courant constant (202) ; et une sortie connectée à la sortie de l'au moins une résistance de contrôle de tension auxiliaire (2032), une tension de résistance (V_{R2}) chutant à travers la résistance de contrôle de tension auxiliaire (2032) et étant produite par le courant de drain (I_{D3}) s'écoulant à travers la résistance de contrôle de tension auxiliaire (2032) ;
un transistor de commande (21) comprenant un drain (D1) connecté à la source de tension externe (V_{cc}) et à l'entrée de l'unité d'entrée (20), une grille (G1) connectée à la sortie de l'unité d'entrée (20), et une source (S1) avec une tension de source (V_{S1}), une tension de grille (V_{G1}) du transistor de commande (21) étant contrôlée par la tension de résistance (V_{R2}), une tension de drain (V_{DS1}) chutant entre le drain (D1) et la source (S1), et un courant constant (I_{D1}) étant généré par la source (S1) ; et
une unité de contrôle de tension (22c) comprenant au moins une résistance (R_{S1}) et une charge semi-conductrice, la résistance (R_{S1}) ayant une entrée connectée à la source (S1) du transistor de commande (21) et une sortie, la charge semi-conductrice étant un transistor de charge (222) ayant un drain (D2) connecté à la grille (G1) du transistor de commande (21) et à la sortie de l'unité d'entrée (20), une grille (G2) connectée à l'entrée de la résistance (R_{S1}) et à la source (S1) du transistor de commande (21) et une source (S2) connectée à la sortie de la résistance (R_{S1}),
une tension de résistance (V_{R1}) chutant à travers la résistance (R_{S1}), une tension de grille (V_{G2}) de la grille (G2) étant constante et égale à la tension de résistance (V_{R1}) et l'unité de contrôle de tension (22c) contrôlant le transistor de commande (21) pour générer le courant constant (I_{D1}).

2. Dispositif à courant constant selon la revendication 1, dans lequel le transistor de commande (21) comprend une résistance interne et une tension de seuil, le courant de drain (I_{D1}) s'écoule à partir du drain (D1) à travers le transistor de commande (21) et présente une amplitude, le transistor de commande (21) est contrôlable dans un mode de saturation dans lequel le transistor de commande (21) laisse passer le plus de courant et la tension de grille (V_{G1}) contrôlant l'amplitude du courant de drain (I_{D1}).

3. Dispositif à courant constant selon la revendication 1 ou 2, dans lequel l'unité de contrôle de tension (22c) contrôle la tension de grille (V_{G2}) de la résistance de charge (222) par la tension de résistance (V_{R1}) et la tension de résistance (V_{R1}) est générée à partir du courant de drain (I_{D1}) s'écoulant à travers la résistance (R_{S1}).

4. Dispositif à courant constant selon la revendication 1 à 3, dans lequel la source de tension externe (Vcc) est une source de tension alternative rectifiée.

5. Dispositif à courant constant selon la revendication 1 à 4, dans lequel la source de tension externe (Vcc) est une source de tension continue.

6. Dispositif à courant constant selon la revendication 1 à 5, dans lequel le dispositif à courant constant peut être utilisé dans un dispositif d'éclairage à état solide.

7. Dispositif à courant constant selon la revendication 1 à 6, dans lequel le dispositif à courant constant peut être utilisé dans une triode conventionnelle pour un variateur de courant alternatif.

8. Dispositif à courant constant selon la revendication 1 à 7, dans lequel la charge semi-conductrice auxiliaire (2031A, 2031B) est au moins une diode Zener.

9. Dispositif à courant constant selon la revendication 1 à 7, dans lequel la charge semi-conductrice auxiliaire (2031A, 2031B) est de multiples diodes.
